# EUROPEAN PATENT SPECIFICATION

(11) **EP 0 425 295 B1**
(45) Date of publication and mention of the grant of the patent: **21.12.1994**
(21) Application number: 90311727.3
(22) Date of filing: 25.10.1990
(51) Int. Cl.: H05B 33/10, H05B 33/12, H05B 33/14, C09K 11/61

(54) **Method of making an electroluminescent device**
Verfahren zur Herstellung einer Elektrolumineszenz-Vorrichtung
Procédé de fabrication d'un dispositif électroluminescent

(30) Priority: 27.10.1989 US 427670
(43) Date of publication of application: 02.05.1991
(73) Proprietor: WESTINGHOUSE ELECTRIC CORPORATION, Pittsburgh Pennsylvania 15222 (US)
(72) Inventor: Kun, Zolton Kokai, Pittsburgh, PA 15235 (US); Leksell, David, Oakmont, PA 15139 (US)
(74) Representative: van Berlyn, Ronald Gilbert

(56) References cited:
- EP-A- 0 239 120
- JOURNAL OF ELECTRONIC MATERIALS vol. 10, no. 1, January 1981, NEW YORK Z.K.KUNET AL.: 'The influence of chlorine on the crystal structure andelectroluminescent behavior of ZnS:Mn films... '
- DATABASE DERWENT WORLD PATENT INDEX Derwent publications ltd., LONDON, GBaccession no. 79-76059B/42 'Fluorescent material emitting orange luminescence...' & JP-A-54114486 [FUTABA DENSHI
- KOGYO], 6 September 1979

## Description

### THIN FILM ELECTROLUMINESCENT COMPOSITIONS

The present invention relates to electroluminescent (EL) film devices and methods of making such devices.

Zinc sulfide films have been used for many years in electroluminescent devices. See, for example, S.R. Title, "6.5 Resonance Measurements on Donors", Physics and Chemistry of II-VI Compounds, Aven et al. Ed., North Holland, Publisher pp 298-303 (1967); H.H. Woodbury, "Solubilities and Diffusion: 5.2.10. The Halogens", Physics and Chemistry of II-VI Compounds, Aven et al. Ed., North Holland, Publisher pp 240-242 (1967); Shionoya, "IV Broad-Band Luminescence Due to Impurities of Donor or Acceptor Type" Luminescence in Inorganic Solids, P. Goldbert, Ed., Academic Press, Publ. pp 255 (1966); Hurd et al., "Physical and Electrical Characterization of Co-Deposited ZnS:Mn Electroluminescent Thin Film Structures" J. Electronic Mat'ls.; Kostylev et al., "Electron Diffraction Study of the Structure of Sublimated Layers of ZnS and ZnS:Mn", Soviet Phys. Cryst. 8:357-359 (1963); U.S. Patent 4,734,723 (Ishitobi); Kun et al., "The Influence of Chlorine on the Crystal Structure and Electroluminescent Behavior of ZnS:Mn Films in Thin Film Electroluminescent Devices" J. Electronic Mat'ls.; 10(1); 287-299 (1981); Van Gool, "3.3 Defect Chemistry of ZnS with a Coactivator, Phillips Res. Rpts. Suppl, No 3, pp 36-44 (1961); US Patent 4,535,341 (Kun et al) and Kun et al., "TFEL Edge Emitter Array for Optical Image Bar Applications" Proceedings of the SID, Vol 29(1) 81-85 (1987). The doping of zinc sulfide films with manganese is also known to increase light output in electroluminescent films.

Kun et al in "The Influence of Chlorine on the Crystal Structure and Electroluminescent Behavior of ZnS:Mn Films in Thin Film Electroluminescent Devices" , Journal of Electronic Materials, 10(1): 287=300 (1981) disclosed the use of chlorine to remove luminescence in these films for face emitting electroluminescent devices.

In spite of these disclosures, there remains a need for an electroluminescent film suitable for use in thin film edge emitting electroluminescent devices that has superior saturation brightness, peak luminous efficiency and utilizes minimal power during operation.

In order to make the invention more clearly understood, the invention will now be described with reference to the accompanying drawings which are given by way of example and in which:
Fig 1 illustrates a preferred embodiment of a thin film electroluminescent device structure of the present invention;
Fig 2 illustrates a side view of the grain structure of the ZnS film in a thin film electroluminescent device;
Fig 3 illustrates a top view of the grains of Fig 2;
Figs 4(A) and 4(B) are graphs plotting excitation voltage vs. face brightness; and
Fig 5 is graph plotting excitation voltages vs. brightness of the same TFEL device as in Figs 4(A) and 4(B).

Currently, electroluminescent devices, and particularly edge emitting thin film electroluminescent (TFEL) devices, require films with adequate output and operation at low voltages. Electroluminescent performance is measured by saturation brightness and peak luminescent efficiency. Low operating voltage and superior electroluminescent properties are essential to provide a workable electroluminescent device. TFEL films that are better suited for edge emitting devices require columnar grain growth but with minimal intergranular microporosity. This type of grain structure maximizes light output from the edge of the film because of reduced internal scattering. A face emitting device uses films that have a large and coarse grain structure in order to maximize light output from the face of the TFEL device as a result of increased internal scattering.

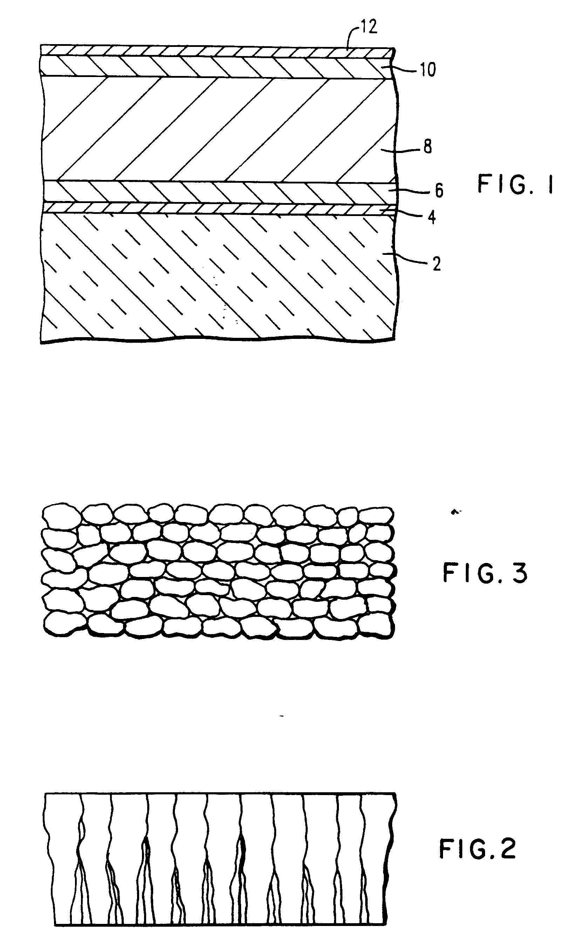

Referring to Figure 1, which illustrates an example of a TFEL device, a substrate 2, suitable substrates include any substance that can withstand the temperatures of fabricating a TFEL device such as soda lime or borosilicate glass, has a first electrode layer 4 applied to it. The substrate 2 and first electrode layer 4 are then heated to preferably about 500°C. The substrate 2 and first electrode layer 4 should be annealed at a temperature no lower than subsequent heatings. The substrate 2 and first electrode layer 4 are annealed in order to burn off any volatiles that may interfere with the deposition of successively applied layers and to the operation of the TFEL. The first electrode layer 4 may be any electrically conductive material which is also opaque such as palladium, and the like. The first electrode layer 4 is deposited by sputtering onto the substrate layer 2. Alternatively, substrates having a suitable electrode layer applied thereon are available commercially, for example from Blazers Optical Group.

After the substrate 2 and first electrode layer 4 reach about room temperature, a first dielectric layer 6 is then deposited on top of the first electrode layer 4 by electron-beam evaporation. The first dielectric layer 6 may be any compatible dielectric material, such as Y₂O₃, for example. Next the substrate 2 having the first electrode layer 4 and the first dielectric layer 6 applied thereon is heated to a range of about 150°C to 350°C for about thirty minutes to ninety minutes, and preferably for about one hour. Thereafter the heating is discontinued and the ZnS:Mn:C1 layer 8 is preferably deposited by electron-beam evaporation from a source material of the present invention while the temperature of the substrate 2 with the first electrode layer 4, the first dielectric layer 6 applied thereon is dropping. After the deposition of the ZnS:Mn:Cl layer, the substrate is annealed at 500°C for 1 hour, then it is allowed to cool to about room temperature. A second dielectric layer 10 is then deposited onto the ZnS:Mn:Cl layer 8 when the materials have reached about room temperature. A second electrode layer 12 is then deposited by electron-beam evaporation.

Each of the dielectric layers and the electrode layers may be composed of the same materials or different materials. For example, the first electrode layer may be palladium and the second electrode layer may be aluminum. For edge emitting devices, it is not desirable for the electrode and/or dielectric layers to be transparent. The rate of application of the layers using electron-beam deposition is preferably about 10Å/sec (1 nm/sec) for the ZnS:Mn:Cl layer and about 5Å/sec (0.5 nm/sec) for the dielectric layers.

The doped zinc sulfide film of the present invention when used as a component in a TFEL edge emitter device, is preferably about 0.8 to 1.2 microns thick and most preferably about 1 micron thick. If the film is too thick, it will require too high a voltage to operate. The doped ZnS film of the present invention is in polycrystalline form with a relatively small grain diameter, and having a columnar grain structure. In order to produce suitable grain structure in the ZnS films, a compromise must be made. High temperature enhances grain growth, however, it also enhances intergranular porosity. The use of chlorine in the deposition of the film aids grain growth and the dropping temperature during ZnS:Mn:Cl deposition minimizes the formation of intergranular microporosity. The electrode layers are preferably about 1000 Å (100 nm) thick and the dielectric layers are preferably about 2000 Å (200 nm) thick.

It is preferred that, the manganese dopant should be present in the ZnS evaporation source materials in an amount of about 0.5 to 5.0% by weight. The manganese dopant is preferred to be added in the form of manganese chloride, manganese carbonate, manganese sulfide, mixtures thereof and the like. If a faster responding device is desired, it is preferable to increase the concentration of the manganese to the upper limit.

The amount of chlorine dopant is critical to the photoluminescent qualities of the film of the present invention. If too much chlorine is used, the film is too conductive and the high electrical field required for excitation across it cannot be maintained. If too little chlorine is used, there is insufficient grain growth enhancement in the film. The addition of chlorine provides a means to make useful TFEL devices at relatively low annealing temperatures. It is preferred that the chlorine be present in an amount of about 0.005 to 0.01% by weight in the ZnS evaporation source material. It is preferred that the chlorine dopant be in the form of manganese chloride, ammonium chloride, mixtures thereof and the like.

The ZnS evaporation source material may be prepared as follows. The zinc sulfide powder is mixed with the dopant components containing manganese and chlorine and fired under nitrogen for about an hour at a temperature of from about 1,000 to 1,050°C. The mixture is then pressed into pills and fired again for about an hour at the same temperature. Prior to each firing step, sulfur in an amount of about 5 percent, a preferred ZnS:Mn:Cl by weight, of the ZnS is added to the composition.

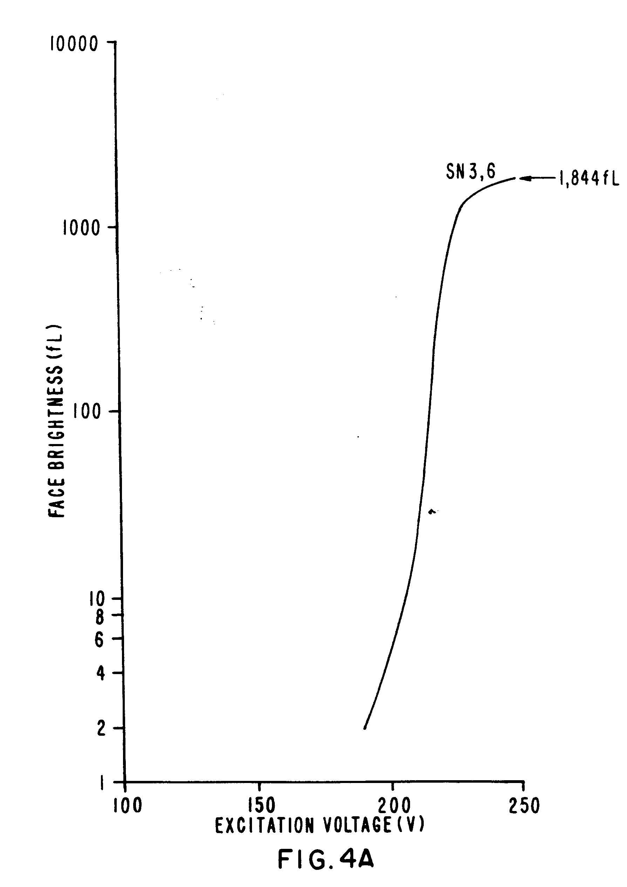

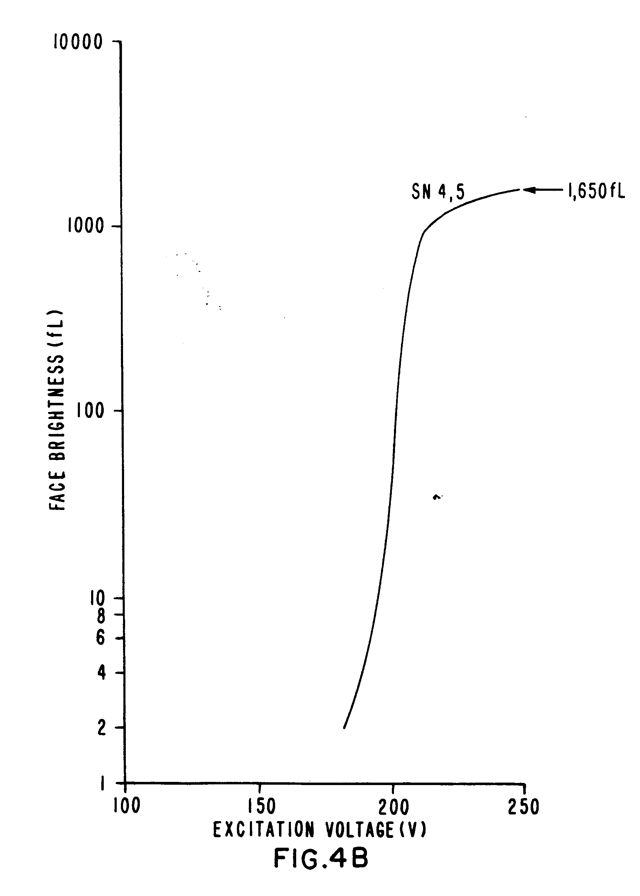

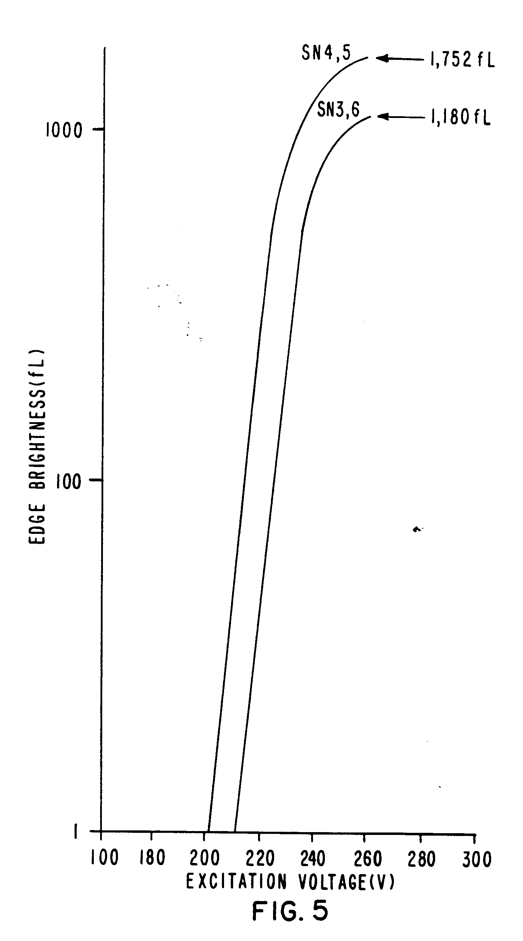

Figures 2 and 3 illustrate the grain configuration of a presently preferred embodiment of the ZnS:Mn:Cl layer of a TFEL device. The columnar grain growth illustrated in Figure 2 shows minimal intergranular microporosity. The grain size is about 600 to 800 Å based on the diameter of the columnar grains, with a typical orientation of the columns being cubic <111> or hexagonal <0001>. This specific configuration allows for optimized edge brightness. Figures 4 and 5 show that face emission or brightness is lower when the edge emission is higher and vice versa, in the same TFEL device. In Fig 4(A) SN3,6 has a face emission of 1844 fl and SN4,5 Fig 4(B) has 1650 fl face emission. However, the edge emission of the same devices is in reverse order. In Fig 5, SN4,5 shows 1752 fl edge emission and SN3,6 has 1180 fl edge emission.

### EXAMPLES

The source material for the electron-beam evaporation was ZnS pills doped with manganese and chlorine. ZnS:Mn pills were also obtained from EM Laboratories Inc. ZnS pills doped with manganese alone were used as controls. The powder was then mixed with about 5 wt% sulfur powder (6N purity), pressed into pills, and fired again for abut one hour under nitrogen flow at about 1050°C.

### TFEL Sample Preparation

All layers of the TFEL device except for the electrode layer were deposited by electron-beam evaporation. The substrate having the electrode layer applied thereon was heated by moving it into position above a fixed heater. The heating was accomplished by exposing the deposition side of the substrate to a high intensity quartz lamp. The substrate and electrode layer were heated to about 5000°C for about an hour and allowed to cool. When the substrate was at about room temperature, a dielectric layer was applied. After the dielectric layer was applied, the substrate was heated to about 300°C, then it was removed from the heat source. The ZnS:Mn:Cl layer was then deposited as the temperature of the substrate decreased. After the substrate cooled to room temperature the second dielectric layer and the second electrode layer were applied sequentially.

In order to achieve different concentrations of manganese and chlorine in the ZnS film, a three layer ZnS structure was used. The first and third layers of ZnS were deposited from a ZnS:5.6 at. % Mn source. The second layer was undoped ZnS. The total thickness of the film was about 1 micron. The manganese concentration was varied by varying the ratio of the thickness and the two doped layers to that of the undoped layer. The three layered distribution of Mn in the film was redistributed during the post deposition anneal. When the ZnS:Mn:Cl film was deposited in one step, the manganese and chlorine concentration was calculated from the known manganese content of the source pills multiplied by the transfer efficiency as determined by the control.

Zinc pills doped with manganese chloride were analysed. The manganese content of these pills was 1.30 wt% and the chlorine content was 0.03 to 0.04 wt%. The ZnS evaporation source material consisted of 12 pills total. Six ZnS pills were doped with MnCl₂ and six ZnS pills were doped with MnS. The resulting ZnS film was conductive when using this composition. Assuming a straight forward two fold dilution, the chlorine content of this source material was about 0.015 to 0.02 wt%, which is outside of the preferred range.

When the chlorine content was diluted four fold by mixing 3 MnCl₂ doped ZnS pills with 9 MnS doped ZnS pills, the electrical conductivity of the ZnS film was sufficiently low to allow high field to form. The overall chlorine content of this source material was about 0.0075 to 0.010 wt%, which is within the preferred range.

It will be appreciated that the above-described invention provides a thin film electroluminescent composition that achieves superior luminescent qualities while operating at relatively low voltages. Further, by heat treatments during processing the thin film layer may be processed at relatively low annealing temperatures and achieve superior properties especially suitable for edge emitting electroluminescent devices.

## Claims

1. A method of making an electroluminescent film device comprising:
providing a substrate having a first electrode layer on said substrate and a first dielectric layer on said first electrode layer;
heating said substrate, first electrode layer and said first dielectric layer;
discontinuing the heating of said substrate, first electrode layer and said first dielectric layer;
depositing a ZnS:Mn:Cl film layer while said substrate, first electrode layer and first dielectric layers are cooling;
depositing a second dielectric layer onto said ZnS:Mn:Cl layer; and
applying a second electrode layer onto said second dielectric layer.

2. A method as claimed in claim 1, wherein the layer of ZnS:Mn:Cl is provided from zinc sulfide source material containing about 0.5 to 5.0% by weight of manganese and about 0.005 to 0.01% by weight of chlorine.

3. A method as claimed in claim 2, including providing manganese in the form of manganese carbonate, manganese chloride, manganese sulfide and mixtures thereof.

4. A method as claimed in claim 2, including providing chlorine in the form of manganese chloride, ammonium chloride, and mixtures thereof.

5. A method as claimed in claim 1, including heating said substrate, said first electrode layer and said first dielectric layer to a temperature of about 300°C.

6. A method as claimed in claim 1, including depositing said first and second dielectric layers at about room temperature.

7. A method as claimed in claim 1, including annealing said substrates and said first electrode layer at a temperature of about 500°C.

8. A method as claimed in claim 1, including providing soda lime or borosilicate glass as said substrates.

9. A method as claimed in claim 1, including providing Y₂O₃ as said first and second dielectric layers.

10. A method as claimed in claim 1, including providing palladium and aluminum and said first and second electrode layers.

11. A method as claimed in claim 1, including heating said substrate first electrode layer and first dielectric layer to a temperature of about 150° to 350°C.

12. A method as claimed in claim 11, including heating said substrate first electrode layer and first dielectric layer for about thirty to ninety minutes.

13. A method as claimed in claim 1, including depositing said ZnS:Mn:Cl at a rate of 10 Å/second (1 nm/second).

14. A method as claimed in claim 1, including providing a ZnS:Mn:Cl film having a grain size of about 600 to 800 Å (60 nm to 80 nm).

15. A method as claimed in claim 14, including providing a ZnS:Mn:Cl film layer having columnar grains having a cubic or hexagonal columnar orientation.

## Patentansprüche

1. Verfahren zur Herstellung eines elektrolumineszenten Films, das folgendes umfasst:
ein Substrat wird vorgesehen, das eine erste Elektroodenschicht auf dem Substrat hat, und eine erste dielektrische Schicht auf der ersten Elektrodenschicht;
das Substrat, die erste Elektrodenschicht und die erste dielektrische Schicht werden erhitzt;
die Erhitzung des Substrat, der ersten Elektrodenschicht und der ersten dielektrischen Schicht wird eingestellt;
eine ZnS:Mn:Cl-Filmschicht wird abgelagert, während das Substrat, die erste Elektrodenschicht, und die erste dielektrische Schicht abkühlen;
eine zweite dielektrische Schicht wird auf der ZnS:Mn:Cl-Schicht abgelagert; und
eine zweite Elektrodenschicht wird auf die zweite dielektrische Schicht aufgetragen.

2. Verfahren nach Anspruch 1, in dem die Schicht aus ZnS:Mn:Cl von einem Zinksulfidquellenmaterial geliefert wird, das ungefähr 0,5 bis 5 Gewichts% Mangan und ungefähr 0,005 bis 0,1 Gewichts% Chlor enthält.

3. Verfahren nach Anspruch 2, das einschliesst, Mangan in Gestalt von Mangancarbonat, Manganchlorid, Mangansulfid und Mischungen davon vorzusehen.

4. Verfahren nach Anspruch 2, das einschliesst, Chlorin in Gestalt von Manganchlorid, Ammoniumchlorid, und Mischungen davon vorzusehen.

5. Verfahren nach Anspruch 1, das einschliesst, das Substrat, die erste Elektrodenschicht und die erste dielektrische Schicht auf eine Temperatur von ungefähr 300°C zu erhitzen.

6. Verfahren nach Anspruch 1, das einschliesst, die ersten und zweiten dielektrischen Schichten bei ungefähr Zimmertemperatur abzulagern.

7. Verfahren nach Anspruch 1, das einschliesst, die Substrate und die erste Elektrodenschicht bei einer Temperatur von ungefähr 500°C zu tempern.

8. Verfahren nach Anspruch 1, das einschliesst, Natronkalk oder Borosilicatglas als Substrate vorzusehen.

9. Verfahren nach Anspruch 1, das einschliesst, Y₂O₃ als erste und zweite dielektrische Schichten vorzusehen.

10. Verfahren nach Anspruch 1, das einschliesst, Palladium und Aluminium als erste und zweite Elektrodenschichten zu liefern.

11. Verfahren nach Anspruch 1, das einschliesst, das Substrat, die erste Elektrodenschicht und die erste dielektrische Schicht auf eine Temperatur von ungefähr 150°C bis 350°C zu erhitzen.

12. Verfahren nach Anspruch 11, das einschliesst, das Substrat, die erste Elektrodenschicht und die erste dielektrische Schicht ungefähr dreißig bis neunzig Minuten zu erhitzen.

13. Verfahren nach Anspruch 1, das einschliesst, das ZnS:Mn:Cl mit einer Geschwindigkeit von 10 Å/Sekunde (1 nm/Sekunde) abzulagern.

14. Verfahren nach Anspruch 1, das einschliesst, einen ZnS:Mn:Cl-Film mit einer Körnergröße von ungefähr 600 bis 800 Å (60nm bis 80 nm) vorzusehen.

15. Verfahren nach Anspruch 14, das einschliesst, eine ZnS:Mn:Cl-Filmschicht mit säulenförmigen Körnern mit einer kubischen oder hexagonalen Säulenausrichtung vorzusehen.

## Revendications

1. Procédé de fabrication d'un dispositif à film électroluminescent, qui comprend les étapes consistant à :
fournir un support muni d'une première couche électrode, disposée sur lui, et d'une première couche diélectrique, disposée sur ladite première couche électrode,
chauffer ledit support, ladite première couche électrode et ladite première couche diélectrique,
arrêter le chauffage dudit support, de ladite première couche électrode et de ladite première couche diélectrique,
déposer une couche constituée d'un film de ZnS:Mn:Cl, pendant que ledit support, ladite première couche électrode et ladite première couche diélectrique sont en train de refroidir,
déposer une seconde couche diélectrique sur ladite couche de ZnS:Mn:Cl, et
appliquer une seconde couche électrode sur ladite seconde couche diélectrique.

2. Procédé selon la revendication 1, dans lequel la couche de ZnS:Mn:Cl provient d'un matériau source de sulfure de zinc, contenant environ 0,5 à 5,0% en poids de manganèse et environ 0,005 à 0, 01% en poids de chlore.

3. Procédé selon la revendication 2, comprenant l'apport de manganèse sous la forme de carbonate de manganèse, de chlorure de manganèse, de sulfure de manganèse ou de leurs mélanges.

4. Procédé selon la revendication 2, comprenant l'apport de chlore sous la forme de chlorure de manganèse, de chlorure d'ammonium ou de leurs mélanges.

5. Procédé selon la revendication 1, comprenant le chauffage dudit support, de ladite première couche électrode et de ladite première couche diélectrique à une température d'environ 300°C.

6. Procédé selon la revendication 1, comprenant le dépôt desdites première et seconde couches diélectriques à une température voisine de la température ordinaire.

7. Procédé selon la revendication 1, comprenant le recuit dudit support et de ladite première couche électrode à une température d'environ 500°C.

8. Procédé selon la revendication 1, comprenant la fourniture de verre à la chaux sodée ou au borosilicate en tant que ledit support.

9. Procédé selon la revendication 1, comprenant la fourniture de Y₂O₃ en tant que lesdites première et seconde couches diélectriques.

10. Procédé selon la revendication 1, comprenant la fourniture de palladium et d'aluminium en tant que lesdites première et seconde couches électrodes.

11. Procédé selon la revendication 1, comprenant le chauffage dudit support, de ladite première couche électrode et de ladite première couche diélectrique à une température d'environ 150°C à 350°C.

12. Procédé selon la revendication 11, comprenant le chauffage dudit support, de ladite première couche électrode et de ladite première couche diélectrique pendant une durée d'environ 30 minutes à environ 90 minutes.

13. Procédé selon la revendication 1, comprenant le dépôt dudit film de ZnS:Mn:Cl à une vitesse de 10 Å/seconde (1 nm/seconde).

14. Procédé selon la revendication 1, comprenant l'apport d'un film de ZnS:Mn:Cl ayant une taille de grain d'environ 600 à environ 800 Å (60nm à 80nm).

15. Procédé selon la revendication 14, comprenant l'apport d'une couche film de ZnS:Mn:Cl, présentant des grains en forme de colonne, ayant une orientation de colonne cubique ou hexagonale.
